# EUROPÄISCHE PATENTSCHRIFT

(11) **EP 2 502 778 B1**
(45) Veröffentlichungstag und Bekanntmachung des Hinweises auf die Patenterteilung: **10.05.2017**
(21) Anmeldenummer: 12161317.8
(22) Anmeldetag: 26.03.2012
(51) Int. Cl.: B60L 11/18, B60L 3/12, B60L 3/04, H01R 3/00, H02J 7/00

(54) **Kommunikationsmodul für Ladegeräte von Elektrofahrzeugen**
Communication module for chargers of electric vehicles
Module de communication pour appareils de chargement de véhicules électriques

(30) Priorität: 25.03.2011 DE 102011006146
(43) Veröffentlichungstag der Anmeldung: 26.09.2012
(73) Patentinhaber: Heinrich Kopp GmbH, 63796 Kahl am Main (DE)
(72) Erfinder: Holscher, Norbert, 63636 Brachttal (DE); Heinz, Klaus-Dieter, 63450 Hanau (DE); Rosenberger, Helmut, 63825 Schöllkrippen (DE); Wagner, Wolfgang, 63755 Alzenau (DE)
(74) Vertreter: Isarpatent

(56) Entgegenhaltungen:
- EP-A1- 1 883 143
- WO-A1-95/31837
- DE-A1-102009 034 886
- US-A1- 2002 081 486

## Beschreibung

### GEBIET DER ERFINDUNG

Die vorliegende Erfindung bezieht sich auf ein Kommunikationsmodul für Ladegeräte von Elektrofahrzeugen, und Verfahren zum Betreiben eines Kommunikationsmoduls, insbesondere für die Verwendung bei Elektrofahrzeugen.

### TECHNISCHER HINTERGRUND

Elektrofahrzeuge erfreuen sich heutzutage immer größerer Beliebtheit. Sie beziehen ihre Energie aus Speichern elektrischer Energie, zum Beispiel Akkumulatoren. Derartige Akkumulatoren müssen nach Energieentnahme, beispielsweise durch Fahrbetrieb des Elektrofahrzeugs wieder mit elektrischer Energie geladen werden.

Ein wesentlicher Faktor für die erfolgreiche Serieneinführung von Elektrofahrzeugen sind Ladestecker, die eine Stromversorgung problemlos unter verschiedenen nationalen Gegebenheiten gewährleisten. Einen Standard für derartige Ladestecker gibt die VDE Anwendungsregel VDE-AR-E 2623-2-2 (Oktober 2009), in dem unterschiedliche Anforderungen an Stecker, Steckdosen, Fahrzeugsteckvorrichtungen und Fahrzeugstecker national und international berücksichtigt werden. Gleichzeitig werden mit dem festgelegten Stecker alle Sicherheitsanforderungen auch im Zusammenhang mit den Ladestationen berücksichtigt.

Für das Laden von Elektrofahrzeugen an Ladestationen müssen daher alle sicherheitsrelevanten Aspekte, insbesondere die Sicherheit der Fahrzeuge und besonders der Nutzer von Elektrofahrzeugen ausreichend berücksichtigt werden. Gleichzeitig sollen der Komfort und die Verlässlichkeit von Ladevorgängen von Elektrofahrzeugen nicht unter sicherheitsbedingten Randbedingungen leiden.

Die Druckschrift DE 10 2009 034 88 A1 offenbart eine Steckvorrichtung für ein Ladekabel mit einem Gehäuse, dem Gehäuse zugeordneten elektrischen Kontakten und ein in dem Gehäuse angeordnetes Kodierungsmittel für den Wert der über das Ladekabel übertragbaren Stromstärke.

Die Druckschrift EP 1 883 143 A1 offenbart eine Schutzschaltung für einen Batteriepack mit einem Thermistor, um zu ermitteln, ob eine Temperatur einer Zelle in dem Batteriepack eine Temperaturschwelle für die Zelle überschritten hat.

Die Druckschrift US 2002/081486 A1 beschreibt ein Verfahren und eine Vorrichtung zum Überwachen eines Ladevorgangs eines Elektrofahrzeugs durch ein Kommunikationsmodul, mit den Schritten und Mitteln zum Ermitteln einer Temperatur in einem Netzstecker des Kommunikationsmoduls durch eine Temperaturüberwachungseinrichtung; Reduzierung eines Netzstroms für das Laden des Elektrofahrzeugs durch das Kommunikationsmodul, falls die ermittelte Temperatur einen Schwellwert überschritten hat. Sowie dem Abschalten des Netzstroms durch das Kommunikationsmodul, falls dieTemperatur nicht unter den Schwellwert sinkt Die Druckschrift WO 95/31837 A1 offenbart eine Ladevorrichtung für NiMH-Batteriezellen. Dabei kann eine Ladevorgangs für 30 Minuten unterbrochen werden, um aus der Batterietemperatur auf die Umgebungstemperatur zu schließen.

Es besteht daher ein Bedarf an Vorrichtungen, die eine Kommunikation von Elektrofahrzeugen mit Ladestationen herstellen können und dabei eine größtmögliche Sicherheit gegenüber Fehlern in der Stromverbindung zwischen Fahrzeug und Ladestation gewährleisten.

Eine Aufgabe der vorliegenden Erfindung besteht daher darin, ein Kommunikationsmodul und ein Verfahren Überwachen eines Ladevorgangs eines Elektrofahrzeugs durch ein Kommunikationsmodul bereitzustellen, das die vorstehend genannten Probleme löst.

Vorteilhafte Ausgestaltungen und Weiterbildungen ergeben sich aus den weiteren Unteransprüchen sowie aus der Beschreibung unter Bezugnahme auf die Figuren der Zeichnung.

### INHALTSANGABE DER ZEICHNUNG

Verschiedene Ausführungsformen und Ausgestaltungen der vorliegenden Erfindung werden nun in Bezug auf die beiliegenden Zeichnungen genauer beschrieben, in denen
- Fig. 1a: ein Kommunikationsmodul;
- Fig. 1b: eine beispielhafte Ausgestaltung des Kommunikationsmodul in Fig. 1a;
- Fig. 2: ein Kommunikationsmodul;
- Fig. 3a: ein Kommunikationsmodul mit einer Fehlerstromschutzeinrichtung;
- Fig. 3b: eine beispielhafte Ausgestaltung des Kommunikationsmoduls aus Fig. 3a mit einer Fehlerstromschutzeinrichtung;
- Fig. 4: ein Kommunikationsmodul;
- Fig. 5: ein Kommunikationsmodul;
- Fig. 6: ein Kommunikationsmodul; und
- Fig. 7: ein Kommunikationsmodul gemäß einer Ausführungsform der Erfindung zeigt.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

Die im Folgenden beispielhaft beschriebenen Kommunikationsmodule mit Fehlerstromschutzeinrichtung können zur Kommunikation zwischen einem Elektrofahrzeug und einem Ladegerät für ein Elektrofahrzeug dienen. Insbesondere können die Merkmale der in den einzelnen Figuren beschriebenen Kommunikationsmodule mit Fehlerstromschutzeinrichtung vorteilhafterweise kombiniert werden, um ein integriertes Kommunikationsmodul mit Fehlerstromschutzeinrichtung zu schaffen, welches sämtliche im Folgenden beschriebenen Vorteile bei der Kommunikation zwischen einem Elektrofahrzeug und einem Ladegerät in sich vereint.

Ein solches integriertes Kommunikationsmodul kann entsprechende Eingangs- und Ausgangsanschlüsse aufweisen, über welche jeweils ein Elektrofahrzeug mit einem Ladeanschluss des elektrischen Energiespeichers des Elektrofahrzeugs und ein Ladegerät für das Elektrofahrzeug mit einem Ladestromausgang zusammengeschlossen werden können.

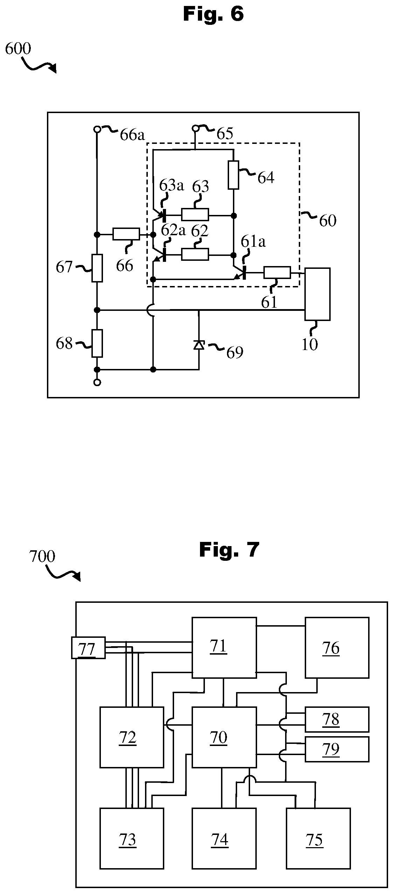

Fig. 7 zeigt ein integriertes Kommunikationsmodul 700 in einem Übersichtsschema gemäß einer Ausführungsform der Erfindung. Das Kommunikationsmodul 700 umfasst dabei einen Mikrocontroller 70, ein Weitbereichsnetzteil 71, eine Fehlerstromschutzeinrichtung 72, eine Einrichtung 73 zum Erkennen des Anschlusses eines Schutzleiters, eine Relaisansteuerung 74, eine Pulsweitenmodulations-Verstärkerstufe 75, eine Bedien- und Parametrierschnittstelle 76, einen Netzstecker 77, eine Lüftungsüberwachungseinrichtung 78 und eine Temperaturüberwachungseinrichtung 79.

Das Weitbereichsnetzteil 71 bezieht dabei den Netzstrom über den Netzstecker 77, der von der Fehlerstromschutzeinrichtung 72 und der Einrichtung 73 zum Erkennen des Anschlusses eines Schutzleiters überwacht wird. Der Mikrocontroller 70 steuert als zentrale Einrichtung des Kommunikationsmoduls die übrigen Bauteile an und gibt über die Pulsweitenmodulations-Verstärkerstufe 75 entsprechende pulsweitenmodulierte Ausgabesignale auf eine Pilotleitung ab.

Die Bedien- und Parametrierschnittstelle 76 kann dabei eine Parametriereinrichtung umfassen, mithilfe derer Parameter des Mikrocontrollers 70 per Software oder Handterminal programmierbar sind. Diese Parameter können in einem Speicher, beispielsweise einem EEPROM des Mikrocontrollers 70 abgelegt werden und zur Konfiguration des Mikrocontrollers 70 genutzt werden. Die Parametrierung kann ab Werk erfolgen, es kann aber auch vorgesehen sein, dass eine entsprechende Parametrierung des Mikrocontrollers 70 beispielsweise länderspezifisch vor Ort von den jeweiligen Zulieferern oder Händlern vorgenommen werden kann. Damit kann jedes einzelne Kommunikationsmodul 700 individuell an die gewünschten Betriebsbedingungen angepasst werden. Als Parametriereinrichtung kann eine serielle Schnittstelle vorgesehen sein.

Weiterhin kann die Bedien- und Parametrierschnittstelle 76 ein Bedienpanel umfassen. Das Bedienpanel kann dazu ausgelegt sein, über Leuchtmittel, visuelle oder auditive Indikatoren einem Nutzer Informationen über den Betriebszustand und mögliche Fehlermeldungen anzugeben. Es kann beispielsweise vorgesehen sein, dass das Kommunikationsmodul mit vordefinierten Netzstromstufen je nach örtlichen Gegebenheiten und nach Auslegung des Ladegerätes programmiert werden kann. Auch weitere Einstellungen zu Ladestrom, Ladedauer, Ladezeitpunkt, und dergleichen können über das Bedienpanel vorgenommen werden. Die Bedieneingaben über das Bedienpanel werden vom Mikrocontroller 70 ausgelesen und entsprechend ausgewertet.

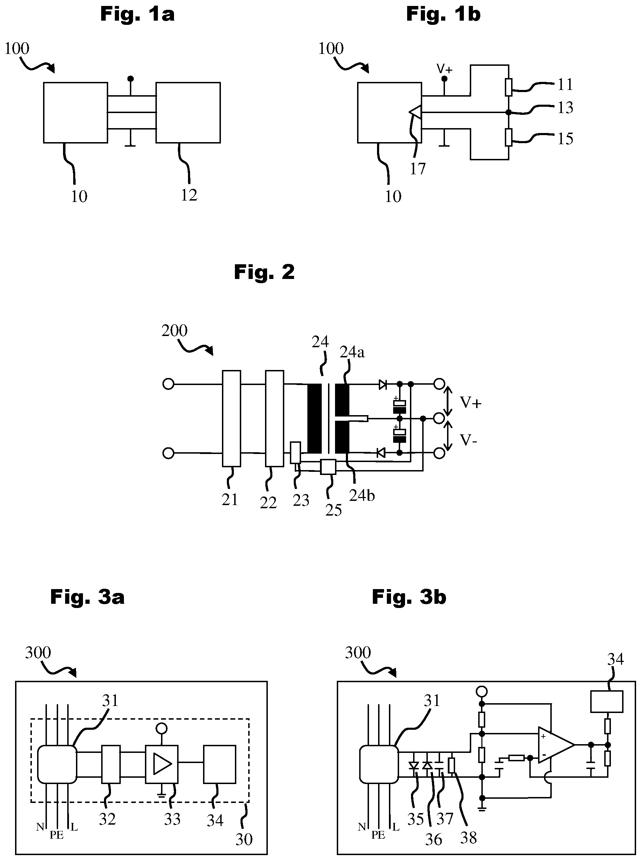

Im Folgenden werden einzelne Einrichtungen des Kommunikationsmoduls 700 mit Bezug auf die Figuren 1a, 1b, 2, 3a, 3b, 4, 5 und 6 in größerem Detail beschrieben. Dabei können die in den Figuren 1a, 1b, 2, 3a, 3b, 4, 5 und 6 dargestellten Mikrocontroller beispielsweise dem Mikrocontroller 70 ähnlich sein.

Fig. 1a zeigt ein Kommunikationsmodul 100. Das Kommunikationsmodul 100 umfasst einen Mikrocontroller 10 und eine Einrichtung 12 zur Abfrage des Lüftungsüberwachungszustands. Die Einrichtung 12 kann dabei insbesondere der Lüftungsüberwachungseinrichtung 78 in Fig. 7 ähnlich sein. In einer Ladebetriebsart für Elektrofahrzeuge darf die Netzspannung lediglich zugeschaltet werden, wenn eine Belüftung des Ladebereichs sichergestellt ist. Dies vermeidet, dass sich entzündliche Gase durch den Ladevorgang im Ladebereich ansammeln, beispielsweise durch das Laden des Akkumulators, und die Gefahr einer Entzündung dieser Gase und damit des Ausbruchs eines Brandes besteht.

Die Einrichtung 12 zur Abfrage des Lüftungsüberwachungszustands gibt dem Mikrocontroller 10 erst dann ein Signal zur Freigabe der Netzspannung, wenn ein entsprechendes Freigabesignal durch eine Lüftungsüberwachungseinrichtung in der Einrichtung 12 empfangen wird.

Fig. 1b zeigt ein Beispiel für die Einrichtung 12 zur Abfrage des Lüftungsüberwachungszustands. Zwei Widerstände 11 und 15 sind über einen Knoten 13 zwischen Versorgungsspannung und Masse in Reihe geschaltet. Der Knoten 13 ist mit einem Pin 17 des Mikrocontrollers 10 verbunden. Die Widerstände 11 und 15 können beispielsweise Widerstände gleichen Wertes sein, so dass am Pin 17 die halbe Betriebsspannung anliegt. Wird jetzt ein potentialfreier Schaltkontakt angeschlossen, so führt ein geschlossener Kontakt dazu, dass der Widerstand 15 kurzgeschlossen und der Pin 17 auf Masse gelegt wird. Dies kann in dem Mikrocontroller 10 erkannt und ausgewertet werden. Wird weiterhin eine Steuerspannung angelegt, ändert sich die Spannung am Pin 17 ebenfalls. In beiden Fällen kann der Mikrocontroller 10 die Spannungsänderung als Bestätigung des ordnungsgemäßen Zustandes der Lüftungsüberwachung auswerten und die Netzspannung freigeben.

Fig. 2 zeigt ein Netzteil 200 für ein Kommunikationsmodul mit einer Fehlerstromschutzeinrichtung. Das Netzteil 200 kann dabei insbesondere dem Weitbereichsnetzteil 71 in Fig. 7 ähnlich sein. Das Netzteil 200 ist als Weitbereichsnetzteil ausgebildet und kann in einem Netzspannungsbereich von etwa 30 bis 300 V, insbesondere zwischen 85 und 265 V Wechselspannung arbeiten. Das Netzteil 200 umfasst einen Netzgleichrichter 21, eine eingangsseitige Filtereinrichtung 22 und einen Schaltregler 23 mit einem Übertrager 24. Der ausgangsseitige Spannungskreis ist dabei gegenüber dem eingangsseitigen Spannungskreis potentialfrei gestellt, das heißt, galvanisch getrennt, und über beispielsweise einen Optokoppler 25 steuerbar geschaltet. Der Übertrager 24 umfasst sekundärseitig zwei Sekundärspulen 24a und 24b, über welche mithilfe von zwei Gleichrichterdioden und gepolten Elektrolytkondensatoren eine negative Versorgungsspannung V- und eine positive Versorgungsspannung V+ erzeugt werden können. Die Regelung der Versorgungsspannung über den Schaltregler 23 und den Optokoppler 25 kann dabei am positiven Sekundärkreis erfolgen, da aufgrund der Symmetrie des Übertragers 24 die negative Spannung ebenfalls stabil mitgeregelt wird.

Für die Auswertung der Spannungen dient intern die negative Spannung als Bezug, da beispielsweise ein Mikrocontroller keine negativen Spannungen erfassen kann.

Das Weitbereichsnetzteil 200 kann durch den hohen Eingangsspannungsbereich in verschiedenen Ländern bei verschiedenen Netzspannungen eingesetzt werden.

Fig. 3a zeigt ein Kommunikationsmodul 300 mit einer Fehlerstromschutzeinrichtung 30. Die Fehlerstromschutzeinrichtung 30 kann dabei insbesondere der Fehlerstromschutzeinrichtung 72 in Fig. 7 ähnlich sein und eine Einrichtung 31 zur Fehlerstromerfassung umfassen. Die Einrichtung 31 kann dabei ein Summenstromwandler sein, der die Summe der Ströme über einen Außenleiter L, einen Neutralleiter N und den Schutzleiter PE erfasst und ein entsprechendes Summensignal ausgibt. Das Summensignal des Summenstromwandlers wird an einen Signalbegrenzer 32 abgegeben, um zu vermeiden, dass bei hohen Fehlerströmen, beispielsweise bei einem Kurzschluss zwischen Phasen- und Schutzleiter, der nachfolgende Signalverstärker 33 geschädigt wird.

Der Signalverstärker 33 verstärkt das Summensignal und gibt es als verstärktes Signal an einen Mikrocontroller 34 weiter. Die Grenzfrequenzen des Signalverstärkers sind so gewählt, dass Wechselströme und pulsierende Gleichfehlerströme bei 50 Hz und 60 Hz, die durch den Summenstromwandler erfasst werden, in Fehlersignale an den Mikrocontroller 34 umgesetzt werden können.

Im einem Bereitschaftszustand, beispielsweise wenn kein Elektrofahrzeug an das Kommunikationsmodul 300 und damit an die Fehlerstromschutzeinrichtung 30 angeschlossen ist, kann ein Gleichstromfehler an dem Signalverstärker 33 in periodischen Abständen zum Nullsummenabgleich ermittelt werden. Damit können Schwankungseffekte wie beispielsweise Temperaturschwankungen ausgeglichen werden.

Im Betrieb kann das Summenstromsignal mit einer vorbestimmten Messrate in einer vorbestimmten Anzahl an Messungen ermittelt werden. Nach einem Nullsummenabgleich können die Messwerte quadratisch gemittelt werden, um ein Summenstromfehlersignal zu berechnen. Je nach Mittelungszeitraum können kurzzeitige Summenstromspitzen, welche auf transiente Fehlerströme zurückzuführen sind, geglättet werden, so dass bei temporären Stromspitzen der Mikrocontroller 34 kein Auftreten eines Fehlers erkennt. Die quadratische Mittelwertbildung der Summenstromsignale ermöglicht vorteilhafterweise eine Erfassung pulsierender Gleichfehlerströme.

Fig. 3b zeigt eine beispielhafte Ausgestaltung des Kommunikationsmoduls 300 aus Fig. 3a mit einer Fehlerstromschutzeinrichtung 30. Die Fehlerstromschutzeinrichtung 30 umfasst neben dem Summenstromwandler 31 eine gegenparallele Schaltung von Dioden 35 und 36 zwischen den Ausgängen des Summenstromwandlers 31, die zur Signalbegrenzung des Wandlers dienen. Weiterhin ist zwischen den Ausgängen des Summenstromwandlers 31 ein Kondensator 37 zur Filterung schneller Störspitzen und ein Widerstand 38 zur Lastbildung für den Summenstromwandler 31 angeordnet. Der Signalverstärker 33 ist hier als Schaltung mit nicht-invertierendem Operationsverstärker gezeigt, dessen Ausgangssignal über eine RC-Parallelschaltung an den invertierenden Eingang gegengekoppelt wird.

Das Kommunikationsmodul 300 der Fig. 3a und 3b kann derart betrieben werden, dass einer bestimmten Anzahl von Fehlerauslösungen, beispielsweise drei Fehlerauslösungen, eine vordefinierte Abschaltzeitspanne initiiert, nach deren Ablauf sich das Kommunikationsmodul 300 wieder selbst in Betrieb nimmt. Dies ermöglicht den Ausgleich einer kurzzeitigen netzseitigen Störung, beispielsweise bei einem kurzen Stromausfall im Netz, ohne dass sich das Kommunikationsmodul 300 vollständig abschaltet. Bei einem Ladevorgang eines Elektrofahrzeugs, bei dem der Nutzer des Fahrzeugs nicht ständig beim Fahrzeug ist, beispielsweise bei einem Ladevorgang über Nacht, kann bei einem solchen einmaligen Stromausfall ein Laden des Fahrzeugs nach der vordefinierten Zeitspanne fortgesetzt werden.

Sobald die bestimmte Anzahl von Fehlerauslösungen jedoch überschritten ist, kann eine endgültige Abschaltung des Kommunikationsmoduls 300 erfolgen, die lediglich mittels externer Rücksetzung wieder aufzuheben ist. Beispielsweise kann eine Rücksetztaste an einem Bedienmodul des Kommunikationsmoduls 300 vorgesehen sein, mithilfe derer ein Rücksetzung des Fehlerauslösezählers veranlasst werden kann. Es kann auch vorgesehen sein, dass sich der Zähler automatisch bei einem Ereignis wie dem Trennen des Fahrzeugs von dem Kommunikationsmodul 300 oder einem Ausschalten des Kommunikationsmoduls 300 zurücksetzt.

Bei einer unbeaufsichtigten Aufladung eines Elektrofahrzeugs muss gewährleistet sein, dass die Schaltkontakte von dem Kommunikationsmodul selbsttätig eingeschaltet werden können. Dies liegt daran, dass aus Sicherheitsgründen eine Netzspannung erst zum Elektrofahrzeug durchgeschaltet werden darf, wenn das Elektrofahrzeug zur Energieaufnahme bereit ist. Auch nach einer externen Netzunterbrechung muss die Netzspannung durch das Kommunikationsmodul wieder selbsttätig zugeschaltet werden.

Die Netzspannung kann nur dann zum Elektrofahrzeug durchgeschaltet werden, wenn das Ladegerät ein Anforderungssignal an den Mikrocontroller des Kommunikationsmoduls sendet. Dadurch sind die Eingangsanschlüsse des Elektrofahrzeugs im Ruhezustand, das heißt, wenn kein Ladevorgang initiiert worden ist, spannungsfrei. Es ist vorzugsweise vorgesehen, dass für eine erhöhte Bediensicherheit ein zwangsweises Durchschalten der Netzspannung durch das Kommunikationsmodul nicht zugelassen wird. Zur weiteren Sicherheit kann das Kommunikationsmodul über eine Personenschutzfunktion verfügen, welche über einen Differenzstromauslöser realisiert ist.

Es kann auch sein, dass die Netzspannung nur dann zum Elektrofahrzeug durchgeschaltet werden kann, wenn das Ladegerät ein Anforderungssignal an das Kommunikationsmodul sendet.

Alternativ kann es auch vorgesehen sein, dass eine automatische Prüfung durch das Kommunikationsmodul erfolgt, ob an das Kommunikationsmodul ein Elektrofahrzeug angeschlossen ist und ob ein Ladungsvorgang mit dem entsprechenden Kommunikationsmodul mit Fehlerstromschutzeinrichtung zulässig ist. In diesem Fall kann die Netzspannung nach der Prüfung sofort an das Elektrofahrzeug durchgeschaltet werden.

Gemäß einer Ausführungsform werden für eine beschleunigte Abschaltung beziehungsweise eine abgesicherte Schaltfolge des Kommunikationsmoduls Relais verwendet, die über Transistoren geschaltet werden können. Hierzu kann insbesondere die Relaisansteuerung 74 in Fig. 7 verwendet werden. Es kann vorgesehen sein, ein Relais für den Außen- und den Neutralleiter und ein separates Relais für den Schutzleiter PE zu verwenden, die jeweils über einen separaten Transistor geschaltet werden können. Eine Anschaltzeit der Relais wird über die Verwendung von Dioden gesteuert. Dabei wird für das Relais für den Außen- und Neutralleiter eine Freilaufdiode verwendet, deren Schaltverzögerungszeit niedriger ist als die Schaltverzögerungszeit einer Freilaufdiode, die zur Schaltung des Schutzleiters PE verwendet wird. Dadurch kann vorteilhafterweise erreicht werden, dass bei Einschaltvorgängen der Schutzleiter PE stets vor dem Spannung tragenden Außen- bzw. Neutralleiter durchgeschaltet wird, und bei Ausschaltvorgängen der Schutzleiter PE stets nach dem Außen- bzw. Neutralleiter abgeschaltet wird.

Es kann beispielsweise auch möglich sein, dass die Relais über Steuerstufen geschaltet werden können. Es kann vorgesehen sein, ein Relais für den Außen- und den Neutralleiter und ein separates Relais für den Schutzleiter PE zu verwenden, die jeweils über eine separate Steuerstufe geschaltet werden können.

Die Freilaufdioden können dabei als Siliziumschutzdioden ausgestaltet sein. Es kann alternativ auch vorgesehen sein, die Freilaufdioden durch eine Reihenschaltung von Siliziumdioden und Zenerdioden zu ersetzen. Damit kann erreicht werden, dass über die Wahl der Arbeitspunkte der Zenerdioden unterschiedliche Abschaltzeiten gemäß der oben erläuterten Abschaltfunktion für Außen- bzw. Neutralleiter und Schutzleiter PE realisiert werden können.

Gemäß einer Ausführungsform kann das Kommunikationsmodul über eine Temperaturüberwachungseinrichtung der Elektronik und des Netzsteckers des Kommunikationsmoduls verfügen. Die Temperaturüberwachungseinrichtung kann dabei insbesondere der Temperaturüberwachungseinrichtung 79 in Fig. 7 entsprechen. Bei schlechter Kontaktqualität zwischen Netzstecker und Steckeranschluss besteht gerade bei hohen Ladeströmen für Elektrofahrzeuge die Gefahr großer Wärmeentwicklung. Im Bereich der Elektronik kann beispielsweise eine starke Sonneneinstrahlung in Verbindung mit hohen Netzströmen ebenfalls zu einer großen Wärmeentwicklung führen. Um Bränden durch Überhitzung vorzubeugen, kann das Kommunikationsmodul Temperaturen über die Temperaturüberwachungseinrichtung erfassen und gegebenenfalls selbsttätig Gegenmaßnahmen einleiten.

Die Temperaturerfassung kann vorzugsweise mittels temperaturabhängiger Widerstände erfolgen. Diese bilden zusammen mit einem Festwiderstand einen Spannungsteiler. Der temperaturabhängige Widerstand kann dabei beispielsweise ein Heißleiter (NTC-Widerstand) sein. Je nach Temperatur am Heißleiter ändert sich das Verhältnis der über den Festwiderstand und den Heißleiter abfallenden Spannungen, so dass am Mittelabgriff des Spannungsteilers eine mit der Temperatur variierende Spannung abgegriffen werden kann. Die dort erfasste Spannung kann von dem Mikrocontroller des Kommunikationsmoduls empfangen und ausgewertet werden.

Alternativ kann es möglich sein, dass die Temperaturerfassung vorzugsweise mittels temperaturabhängiger Sensoren erfolgen kann. Der temperaturabhängige Sensor kann dabei beispielsweise ein Heißleiter (NTC-Widerstand) sein.

Vorzugsweise kann jeweils eine derartige Spannungsteilervorrichtung im Inneren des Kommunikationsmoduls und eine weitere Spannungsteilervorrichtung im Netzstecker 77 des Kommunikationsmoduls vorgesehen sein.

Falls der Mikrocontroller ein Spannungssignal erhält, welches eine überhöhte Temperatur in der Elektronik oder im Netzstecker 77 anzeigt, können schrittweise verschiedene Gegenmaßnahmen eingeleitet werden:
In einem ersten Schritt erfolgt eine Reduzierung des Netzstromes, um die stromabhängige Überhitzung der Bauteile zu verringern. Sollte die Temperatur auch bei Anlegen der niedrigsten Netzstromstufe noch zu hoch sein, kann sich das Kommunikationsmodul selbsttätig abschalten. Nach einer Normalisierung der Temperaturen in einen Sollbereich kann der Netzstrom schrittweise wieder bis zum maximal zulässigen bzw. bis zum gewünschten Netzstrom angehoben werden. Im Extremfall, das heißt, wenn die Temperatur einen kritischen Schwellwert überschreitet, kann eine sofortige Notabschaltung des Kommunikationsmoduls erfolgen.

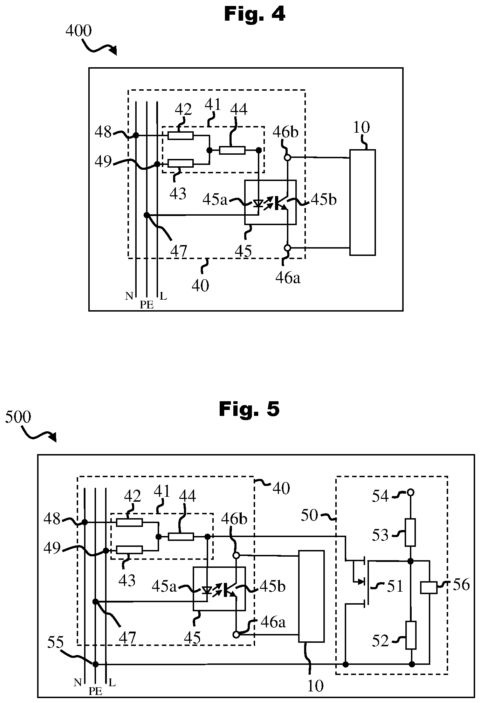

Fig. 4 zeigt eine beispielhafte Ausgestaltung eines Kommunikationsmoduls 400. Das Kommunikationsmodul 400 umfasst eine Einrichtung 40 zum Erkennen des Anschlusses eines Schutzleiters PE und einen Mikrocontroller 10. Die Einrichtung 40 kann dabei insbesondere der Einrichtung 73 zum Erkennen des Anschlusses eines Schutzleiters in Fig. 7 ähnlich sein.

Die Einrichtung 40 zum Erkennen des Anschlusses eines Schutzleiters PE weist einen Spannungsteiler 41 auf, welcher über einen Anschluss 48 an dem Neutralleiter N und einen Anschluss 49 an dem Außenleiter L angeschlossen ist. Der Spannungsteiler 41 kann dabei zwei Widerstände 42 und 43 zur Spannungsteilung und einen oder mehrere Widerstände 44 zur Erhöhung der Spannungsfestigkeit aufweisen. Es kann weiterhin vorgesehen sein, dass die Widerstände 42 und 43 jeweils durch eine Reihenschaltung mehrerer Ohmscher Widerstände gebildet werden, um die Spannungsfestigkeit des Spannungsteilers 41 weiter zu verbessern.

Über den Spannungsteiler 41 kann eine Netzspannung an dem Außenleiter L und dem Neutralleiter N abgegriffen werden, wobei eine Ausgangsspannung an dem Spannungsteiler 41 unabhängig von der momentanen Polarität des Außen- bzw. Neutralleiters ist. Der Ausgang des Spannungsteilers 41 ist an eine Schaltstufe 45 angeschlossen. Die Schaltstufe 45 kann beispielsweise, wie in Fig. 4 beispielhaft dargestellt, ein Optokoppler sein, es ist jedoch ebenso möglich, andere galvanisch entkoppelte Schaltstufen wie beispielsweise Triac-Koppler, Opto-FETs, Piezokoppler oder Relaisstufen zu verwenden. Im dargestellten Beispiel umfasst die Schaltstufe 45 eine Diode 45a, welche an einem Anschluss mit dem Ausgang des Spannungsteilers 45 und an einem anderen Anschluss 47 mit dem Schutzleiter 47 verbunden ist.

Wenn ein Schutzleiter PE an das Kommunikationsmodul 400 angeschlossen ist bzw. der Schutzleiter PE mit Masse verbunden ist, fließt ein Strom über die Diode 45a und ein Transistor 45b in dem Optokoppler 45 schaltet frei. An den Signalanschlüssen 46a und 46b kann damit ein Wechselsignal abgegriffen werden, welches zwischen der Betriebsspannung des Kommunikationsmoduls 400 bzw. des Mikrocontrollers 10, zum Beispiel 5V, und 0V liegt.

Der Mikrocontroller 10 kann beispielsweise das durch die Schaltstufe 45 abgegebene Signal auswerten und prüfen, ob ein Schutzleiter PE korrekt angeschlossen ist. Wenn beispielsweise innerhalb eines bestimmten Zeitfensters mindestens zwei Pulse erkannt werden, die eine vorbestimmte Pulsbreite und einen vorbestimmten zeitlichen Abstand zueinander aufweisen, so kann der Mikrocontroller 10 dies als angeschlossenen Schutzleiter PE erkennen und alle weiteren Funktionen des Kommunikationsmoduls 400 freigeben. Andernfalls kann der Mikrocontroller 10 dazu ausgelegt sein, das Kommunikationsmodul 400 inaktiv zu schalten. Die Überwachung, ob ein Schutzleiter PE korrekt an das Kommunikationsmodul 400 angeschlossen ist, kann während des Betriebs dynamisch erfolgen, und sobald eine Unterbrechung des Schutzleiterkontakts festgestellt wird, kann der Mikrocontroller 10 eine Sicherheitsabschaltung des Kommunikationsmoduls 400 veranlassen.

Fig. 5 zeigt eine beispielhafte Ausgestaltung eines Kommunikationsmoduls 500. Das Kommunikationsmodul 500 unterscheidet sich von dem in Fig. 4 gezeigten Kommunikationsmodul 400 dadurch, dass das Kommunikationsmodul 500 weiterhin eine Schaltung 50 zum Erkennen einer Fremdspannung auf dem Schutzleiter PE aufweist. Die Schaltung 50 umfasst dabei einen Schutzwiderstand 53 und einen Arbeitswiderstand 52, die in Reihe zwischen einem Knoten 55 an dem Schutzleiter PE und einem Massekontakt 54 angeordnet sind. An einem Knoten zwischen dem Schutzwiderstand 53 und dem Arbeitswiderstand 52 ist ein Gate eines Schutzschaltertransistors 51, beispielsweise eines selbstsperrenden n-Kanal-MOSFETs 51, angeschlossen. Weiterhin umfasst die Schaltung 50 eine Spannungsbegrenzungsschaltung 56, welche beispielsweise aus einer Parallelschaltung einer Zener-Diode und einem Kondensator zur Störunterdrückung aufgebaut sein kann, und welche zwischen dem Knoten zwischen dem Schutzwiderstand 53 und dem Arbeitswiderstand 52 und dem Schutzleiteranschluss 55 angeordnet ist.

Wenn auf dem Schutzleiter PE eine unerwünschte berührgefährliche Spannung anliegt, welche potentiell gefährlich für den Anwender ist, fließt ein unerwünschter Strom von dem Schutzleiter PE über die Diode 45a oder die Substratdiode des Schutzschaltertransistors 51 und den Spannungsteiler 41 auf den Außen- bzw. Neutralleiter ab. Wird jedoch der Massekontakt 54 beim bestimmungsgemäßen Betrieb des Kommunikationsmoduls 500 zum Laden eines Energiespeichers eines Elektrofahrzeugs mit einem Massekontakt des Elektrofahrzeugs, beispielsweise mit der Karosserie des Elektrofahrzeugs, verbunden, kann ausgenutzt werden, dass das Elektrofahrzeug beispielsweise mit seinen Reifen über die Erde mit einem Massepotential verbunden ist. Dadurch kann das Massepotential des Elektrofahrzeugs als Sensor für das Vorhandensein einer unerwünschten berührgefährlichen Spannung auf dem Schutzleiter PE eingesetzt werden.

Bei einem Anliegen eines Massepotentials über den Schutzwiderstand 53 wird das Gatepotential des Schutzschaltertransistors 51 auf Masse gesetzt und der Schutzschaltertransistor 51 schaltet die Diode 45a des Optokopplers 45 kurz. Dadurch wird der Transistor 45b des Optokopplers 45 sofort gesperrt und es kann eine verbraucherseitige Trennung von der Netzspannung erfolgen.

Eine detailliertere Beschreibung der Funktionsweise der Einrichtung 40 zum Erkennen des Anschlusses eines Schutzleiters PE sowie der Schaltung 50 zum Erkennen einer Fremdspannung auf dem Schutzleiter PE ist in der Patentschrift EP 0 806 825 B1 zu finden.

Fig. 6 zeigt ein Kommunikationsmodul 600 mit einem Mikrocontroller 10 und einer Endstufe 60 zur Erzeugung von pulsweitenmodulierten Ausgangssignalen. Die Endstufe 60 kann dabei insbesondere der Pulsweitenmodulations-Verstärkerstufe 75 in Fig. 7 ähnlich sein.

Die Endstufe 60 umfasst Widerstände 61, 62, 63 und 64 sowie Transistoren 61a, 62a und 63a. Ein Steuerausgang des Mikrocontrollers 10 zur Erzeugung eines Pulsweitenmodulationssignals ist über den Widerstand 61 mit einem Gate des Transistors 61a verbunden, der über einen Widerstand 64 von einem Spannungsquelle 65 mit Strom versorgt wird. An Knotenpunkten zwischen dem Widerstand 64 und dem Transistor 61a sind Gateanschlüsse der Transistoren 62a und 63a jeweils über die Widerstände 62 bzw. 63 angeschlossen. Die Transistoren 62a und 63a sind in Reihe geschaltet und werden ebenfalls über die Spannungsquelle 65 mit Strom versorgt. Über einen Knotenpunkt zwischen den Transistoren 62a und 63a wird über einen Widerstand 66 ein pulsweitenmoduliertes Ausgangssignal an einem Ausgang 66a, beispielsweise einer Pilotleitung des Kommunikationsmoduls 600 bereitgestellt.

Alternativ kann ein Steuerausgang des Mikrocontrollers 10 zur Erzeugung eines Pulsweitenmodulationssignals über den Widerstand 61 mit einer Basis des Transistors 61a verbunden sein, der über einen Widerstand 64 von einem Spannungsquelle 65 mit Strom versorgt wird. An Knotenpunkten zwischen dem Widerstand 64 und dem Transistor 61a können Basisanschlüsse der Transistoren 62a und 63a jeweils über die Widerstände 62 bzw. 63 angeschlossen sein.

Es kann vorgesehen sein, dass über einen Spannungsteiler aus den Widerständen 67 und 68 das Ausgangssignal wieder dem Mikrocontroller 10 zu Steuerzwecken zugeführt wird. Dabei dient eine Zenerdiode 69 als Überspannungsschutz gegenüber Fremdspannungen auf der Pilotleitung.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.Weitere Beispiele umfassen als Beispiel 1 ein Kommunikationsmodul für ein Ladegerät eines Elektrofahrzeugs, mit einem Summenstromwandler, welcher dazu ausgelegt ist, die Summe der Ströme über einen Außenleiter, einen Neutralleiter und einen Schutzleiter zu erfassen und ein Summensignal zu erzeugen; einem Signalbegrenzer, welcher dazu ausgelegt ist, das Summensignal des Summenstromwandlers zu begrenzen; mit einem Signalverstärker, welcher das begrenzte Summensignal verstärkt; mit einem Mikrocontroller, welcher dazu ausgelegt ist, das verstärkte Summensignal des Summenstromwandlers auszuwerten, wobei der Mikrocontroller dazu ausgelegt ist, das Summensignal mit einer vorbestimmten Messrate in einer vorbestimmten Anzahl an Messungen zu ermitteln, und zur Erfassung pulsierender Gleichfehlerströme quadratisch zu mitteln.

In einem Kommunikationsmodul nach Beispiel 1 kann der Signalbegrenzer eine gegenparallele Schaltung aus zwei Dioden umfassen.

In einem Kommunikationsmodul nach Beispiel 1 kann der Signalbegrenzer einen Kondensator zur Filterung von Störspitzen in dem Summensignal aufweisen.

In einem Kommunikationsmodul nach Beispiel 1 kann der Signalbegrenzer einen Widerstand zur Lastbildung für den Summenstromwandler aufweisen.

In einem Kommunikationsmodul nach Beispiel 1 kann der Signalverstärker einen nicht-invertierenden Operationsverstärker aufweisen, dessen Ausgangssignal über eine RC-Parallelschaltung an den invertierenden Eingang gekoppelt ist.

Beispiel 2 umfasst ein Kommunikationsmodul für ein Ladegerät eines Elektrofahrzeugs, mit einer Einrichtung zum Erkennen des Anschlusses eines Schutzleiters, welche eine Schaltstufe zum Erzeugen eines Ausgangssignals in Abhängigkeit von dem Anschluss eines Schutzleiters an das Kommunikationsmodul, mit einer Schaltung zum Erkennen einer Fremdspannung auf dem Schutzleiter, wobei die Schaltung zum Erkennen einer Fremdspannung auf dem Schutzleiter umfasst:
- einen Transistorschalter, welcher dazu ausgelegt ist, die Schaltstufe selektiv kurzzuschließen;
- einen Schutzwiderstand, welcher mit dem Gateanschluss des Transistorschalters verbunden ist; und
- einem Massekontakt, welcher dazu ausgelegt ist, mit einem Massepotential des Elektrofahrzeugs verbunden zu werden.

In einem Kommunikationsmodul nach Beispiel 2 kann der Massekontakt dazu ausgelegt sein, mit der Karosserie des Elektrofahrzeugs verbunden zu werden.

Beispiel 3 umfasst ein Verfahren zum Ansteuern eines Ladegeräts für ein Elektrofahrzeug, mit den Schritten:
Verbinden des Ladegeräts für ein Elektrofahrzeug mit einer Netzspannung über ein Kommunikationsmodul;
Empfangen eines Ladeanforderungssignals des Ladegeräts durch das Kommunikationsmodul; und
Durchschalten der Netzspannung durch das Kommunikationsmodul zu dem Ladegerät in Abhängigkeit von dem Empfang des Ladeanforderungssignals.

Beispiel 4 umfasst ein Kommunikationsmodul für ein Ladegerät für ein Elektrofahrzeug, mit einem ersten Relais für einen Außen- und Neutralleiter einer Spannungsversorgung des Ladegeräts, mit einem zweiten Relais für einen Schutzleiter der Spannungsversorgung des Ladegeräts, wobei die Anschaltzeiten des ersten und zweiten Relais jeweils über Diodenschaltungen unterschiedlicher Schaltverzögerungszeit gesteuert werden, so dass die Anschaltzeit des ersten Relais kürzer ist als die Anschaltzeit des zweiten Relais.

In einem Kommunikationsmodul nach Beispiel 4 kann die Schaltverzögerungszeit der dem ersten Relais zugeordneten Diodenschaltung geringer sein als die Schaltverzögerungszeit der dem zweiten Relais zugeordneten Diodenschaltung.

In einem Kommunikationsmodul nach Beispiel 4 können die Diodenschaltungen Freilaufdioden umfassen.

In einem Kommunikationsmodul nach Beispiel 4 können die Diodenschaltungen jeweils eine Reihenschaltung aus einer Siliziumdiode und einer Zenerdiode umfassen.

Beispiel 5 umfasst ein Weitbereichsnetzteil für ein Kommunikationsmodul für ein Ladegerät eines Elektrofahrzeugs, mit einem Netzgleichrichter, mit einer eingangsseitigen Filtereinrichtung, mit einem Übertrager, mit einem primärseitigen Schaltregler, wobei der Übertrager sekundärseitig zwei Sekundärspulen umfasst, über welche eine negative Versorgungsspannung und eine positive Versorgungsspannung abgegriffen werden können, und wobei der Schaltregler dazu ausgelegt ist, nur eine der beiden Versorgungsspannungen zu regeln.

In einem Weitbereichsnetzteil nach Beispiel 5 kann ein Optokoppler vorgesehen sein, über welchen der Schaltregler mit der Sekundärseite des Übertragers verbunden ist.

In einem Weitbereichsnetzteil nach Beispiel 5 können ferner zwei sekundärseitige Gleichrichterdioden und zwei gepolte Elektrolytkondensatoren vorgesehen sein, mit deren Hilfe die negative Versorgungsspannung und die positive Versorgungsspannung erzeugt werden.

Beispiel 6 umfasst ein Kommunikationsmodul für ein Ladegerät eines Elektrofahrzeugs, mit einem Mikrocontroller, mit einer Einrichtung zur Abfrage eines Lüftungsüberwachungszustands eines Ladebereichs des Elektrofahrzeugs, welche dazu ausgelegt ist, in Abhängigkeit von einem Freigabesignal einer Lüftungsüberwachung dem Mikrocontroller ein Signal zur Freigabe der Netzspannung des Kommunikationsmoduls zu übermitteln.

In einem Kommunikationsmodul nach Beispiel 6 kann die Einrichtung zur Abfrage eines Lüftungsüberwachungszustands einen Spannungsteiler mit einer Reihenschaltung aus zwei Widerständen umfassen, zwischen denen an einem Knoten das Signal zur Freigabe der Netzspannung durch den Mikrocontroller abgegriffen werden kann.

## Patentansprüche

1. Verfahren zum Überwachen eines Ladevorgangs eines Elektrofahrzeugs durch ein Kommunikationsmodul (700), mit den Schritten:
Ermitteln einer Temperatur in einem Netzstecker (77) des Kommunikationsmoduls (700) durch eine Temperaturüberwachungseinrichtung (79);
Reduzierung eines Netzstroms für das Laden des Elektrofahrzeugs durch das Kommunikationsmodul (700), falls die ermittelte Temperatur einen Schwellwert überschritten hat;
Abschalten des Netzstroms durch das Kommunikationsmodul (700), falls nach der Reduzierung des Netzstroms die Temperatur innerhalb einer vorbestimmten Zeitspanne nicht unter den Schwellwert sinkt.

2. Kommunikationsmodul (700) für ein Ladegerät für ein Elektrofahrzeug, mit:
einem Mikrocontroller (70),
einem Netzstecker (77),
einem Weitbereichsnetzteil (71), das dazu ausgelegt ist, über den Netzstecker (77) einen Netzstrom zu beziehen;
und
einer Temperaturüberwachungseinrichtung (79), welche dazu ausgelegt ist, eine Temperatur in dem Netzstecker (77) des Kommunikationsmoduls (700) zu erfassen, und welche eine Spannungsteilervorrichtung aufweist,
wobei die Spannungsteilervorrichtung einen Festwiderstand und einen Heißleiter oder Sensor aufweist, und wobei am Mittelabgriff der Spannungsteilervorrichtung eine mit der Temperatur variierende Spannung abgegriffen werden kann, welche von dem Mikrocontroller (70) ausgewertet wird, und
wobei der der Mikrokontroller dazu ausgelegt ist, den bezogenen Netzstrom zu reduziert, falls die erfasste Temperatur einen Schwellwert überschritten hat und den Netzstrom abzuschalten, falls nach der Reduzierung des Netzstroms die Temperatur innerhalb einer vorbestimmten Zeitspanne nicht unter den Schwellwert sinkt.

3. Kommunikationsmodul nach Anspruch 2,
wobei die Spannungsteilervorrichtung in dem Netzstecker (77) des Kommunikationsmoduls (700) angeordnet ist.

## Claims

1. Method of monitoring a charging process in an electrical vehicle by means of a communication module (700), comprising the steps:
determining a temperature in a mains plug (77) of the communication module (700) by means of a temperature monitoring device (79);
reducing mains power for charging the electric vehicle by means of the communication module (700), in case the temperature determined has exceeded a threshold temperature;
shutting down the mains power by means of the communication module (700) in case the temperature does not drop below the threshold temperature within a predetermined time interval after reducing the mains power.

2. Communication module (700) for a charging device for an electric vehicle, with:
a micro-controller (70),
a mains plug (77),
a wide-range power supply unit (71) designed to draw mains power via the mains plug (77); and
a temperature monitoring device (79) designed to detect a temperature in the mains plug (77) of the communication module (700), and which has a voltage divider device,
wherein the voltage divider device has a fixed-value resistor and a negative temperature coefficient thermistor or sensor, and wherein at the centre tap of the voltage divider device a voltage varying with the temperature can be tapped which is analysed by the micro-controller (70), and
wherein the micro-controller is designed to reduce the drawn mains power in case the detected temperature has exceeded a threshold temperature and to switch off the mains power in case the temperature does not drop below the threshold temperature within a predetermined time interval after reducing the mains power.

3. Communication module according to claim 2, wherein the voltage divider device is arranged in the mains plug (77) of the communication module (700).

## Revendications

1. Procédé de surveillance d'un processus de recharge d'un véhicule électrique par l'intermédiaire d'un module de communication (700), comprenant les étapes consistant à :
déterminer une température dans une fiche de secteur (77) du module de communication (700) par l'intermédiaire d'un moyen de surveillance de température (79) ;
réduire un courant du réseau pour la charge du véhicule électrique par l'intermédiaire du module de communication (700), dans le cas où la température déterminée a dépassé une valeur de seuil ;
couper le courant du réseau par l'intermédiaire du module de communication (700), dans le cas où, après la réduction du courant du réseau, la température ne descend pas en dessous de la valeur de seuil dans un délai prédéfini.

2. Module de communication (700) pour un appareil de recharge pour un véhicule électrique, comprenant :
un microcontrôleur (70),
une fiche de secteur (77),
un bloc d'alimentation longue portée (71), qui est conçu pour recevoir un courant du réseau par le biais de la fiche de secteur (77) ; et
un moyen de surveillance de température (79) qui est conçu pour détecter une température dans la fiche de secteur (77) du module de communication (700), et qui présente un moyen réducteur de tension,
dans lequel le moyen réducteur de tension présente une résistance fixe et un thermistance ou capteur et, dans lequel, au niveau du prélèvement de tension moyenne du moyen réducteur de tension, une tension variant avec la température peut être prélevée, qui est exploitée par le microcontrôleur (70), et
dans lequel le microcontrôleur est conçu pour réduire le courant du réseau rapporté, dans le cas où la température détectée a dépassé une valeur de seuil, et pour couper le courant du réseau, dans le cas où, après la réduction du courant du réseau, la température ne descend pas en dessous de la valeur de seuil dans un délai prédéfini.

3. Module de communication selon la revendication 2, dans lequel le moyen réducteur de tension est disposé dans la fiche de secteur (77) du module de communication (700).
